# EUROPEAN PATENT SPECIFICATION

(11) **EP 2 594 124 B1**
(45) Date of publication and mention of the grant of the patent: **21.01.2015**
(21) Application number: 12007531.2
(22) Date of filing: 06.11.2012
(51) Int. Cl.: A01D 34/90, A45F 3/14

(54) **Harness**
Tragegeschirr
Harnais

(30) Priority: 11.11.2011 JP 2011247807
(43) Date of publication of application: 22.05.2013
(73) Proprietor: Makita Corporation, Anjo-shi, Aichi 446-8502 (JP)
(72) Inventor: Hachisuka, Tomohiro, Anjo-shi, Aichi 446-8502 (JP)
(74) Representative: Müller-Boré & Partner Patentanwälte PartG mbB

(56) References cited:
- EP-A1- 2 243 347
- EP-A2- 0 826 324
- WO-A1-98/25498

## Description

### BACKGROUND OF THE INVENTION

### TECHNICAL FIELD

The present invention relates to harnesses the operator wears in order to support a power tool such as a brush cutter or a blower.

### BACKGROUND ART

When working with a power tool such as a brush cutter or a blower, the operator wears work equipment called "harness" in view of workability, and for example, the operator engages the power tool with the harness by hanging the power tool therefrom, so that he/she can support the weight of the power tool with his/her body. As described in Japanese Patent Application Publication No. 2010-252689 (JP 2010-252689 A), a known harness includes a back plate that is placed on the back of the operator, shoulder plates that are formed integrally with the back plate and that together with shoulder strap belts are placed on the shoulders of the operator, and waist belts that are fixed to the back plate. In the harness, the shoulder strap belts and the waist belts are connected to a buckle on the front side of the operator.

In the harness, the back plate has a curved shape so as to fit on the back of the operator, and each of the shoulder plates has a plurality of grooves so as to allow the shoulder plate to be bent as appropriate along the shoulder of the operator. This harness is thus designed so that the back plate and the shoulder plates fit on the back and shoulders of the operator when he/she wears the harness.

However, even though the back plate of the harness has a curved shape, the back plate may not fit on the back of every operator in an optimal state. As a result, the weight of the power tool cannot be sufficiently distributed by the back plate, which may impose a burden on the operator due to such an uneven load. Moreover, in order to allow the shoulder plates to fit on the operator's shoulders, the plurality of grooves need be provided in the shoulder plates, which may complicate the structure of the harness.

EP 0 826 324 A2 discloses a harness which is worn by an operator to support a power tool on a lateral side of the operator and which includes a back plate extending in a vertical direction and is placeable on a back of the operator and a pair of shoulder belts fixed to the back plate that contact the shoulders of the operator.

### SUMMARY OF THE INVENTION

The present invention was devised in view of the above problems, and it is an object of the present invention to provide a harness having a simple structure and capable of reducing a burden on the operator.

According to a first aspect of the present invention, a harness that is worn by an operator to support a power tool on a lateral side of the operator includes a back plate extending in a vertical direction and placeable on a back of the operator, and a pair of shoulder strap pads that contact both shoulders of the operator. In the harness, the shoulder strap pads are fixed to the back plate, and the back plate is connected to each of the shoulder strap pads by a belt, and a position of the back plate is adjustable toward the back of the operator by adjusting a length of the belt using an adjusting member with which the length of the belt is adjustable.

According to a second aspect of the present invention, in the first aspect, the harness further includes a support member that supports the power tool on the lateral side of the operator, wherein the pair of shoulder strap pads extend diagonally downward, and are connected together with a joint on a front side of the operator, and the support member is connected to the joint.

According to a third aspect of the present invention, in the first aspect, a narrow portion having a smaller lateral dimension than a lower part of the back plate is provided in an upper part of the back plate, the narrow portion is connected to each of the shoulder strap pads by the belt, and the narrow portion is bent and pulled toward the back of the operator by adjusting the length of the belt using the adjusting member.

According to a fourth aspect of the present invention, in the first aspect, a hole that allows the back plate to be carried by hand is provided in the back plate at a position above a position where the shoulder strap pads are fixed to the back plate.

According to the first aspect of the present invention, the harness is structured so that the back plate is pulled toward the operator's back by merely adjusting, with the adjusting member, the length of the belt connecting the back plate to the shoulder strap pads. Thus, the back plate can be brought into close contact with the operator's back by using this simple structure. As a result, the weight of the power tool is distributed to the back plate, whereby the burden on the operator can be reduced.

According to the second aspect of the present invention, the weight of the power tool can be distributed to both shoulders of the operator via the pair of shoulder strap pads. Thus, the load is not intensively applied to one of the shoulders of the operator, and the burden on the operator's shoulders can be reduced.

According to the third aspect of the present invention, the narrow portion provided in the upper part of the back plate has a lower second moment of area than the lower part of the back plate. Thus, the upper part of the back plate is more easily bent than the lower part of the back plate. Accordingly, the upper part of the back plate can be easily pulled toward the operator's back by adjusting, with the adjusting member, the length of the belt connecting the narrow portion to the shoulder strap pad.

According to the fourth aspect of the present invention, the hole that allows the operator to carry the back plate in his/her hand is provided in the back plate, and the lateral dimension of the hole is larger than that of the operator's hand. Thus, an opening portion formed by the hole occupies a relatively large proportion of the lateral dimension of the back plate. Accordingly, rigidity of the back plate can be sufficiently reduced near the hole. Moreover, in the back plate, the hole is provided above the position where the shoulder strap pads are fixed to the back plate. Accordingly, the back plate can be bent near the hole by adjusting the length of the belt. The back plate is thus brought into close contact with the back of the operator, and the weight of the power tool is distributed to the back plate, whereby the burden on the operator can be reduced.

When the operator is not wearing the harness, the operator can carry the harness while holding the back plate by using the hole.

### BRIEF DESCRIPTION OF THE DRAWINGS

FIG. 1 is a developed view of a harness according to an embodiment of the present invention.
FIG. 2 is a back view of the harness worn by the operator.
FIG. 3 is a side view of the harness.
FIG. 4 is a front view of the harness.
FIG. 5 is a cross-sectional view of a shoulder strap pad included in the harness.
FIG. 6 is a plan view of a waist pad included in the harness.
FIG. 7 is a cross-sectional view showing a main part taken along line A-A in FIG. 6.

### DETAILED DESCRIPTION OF THE EMBODIMENTS

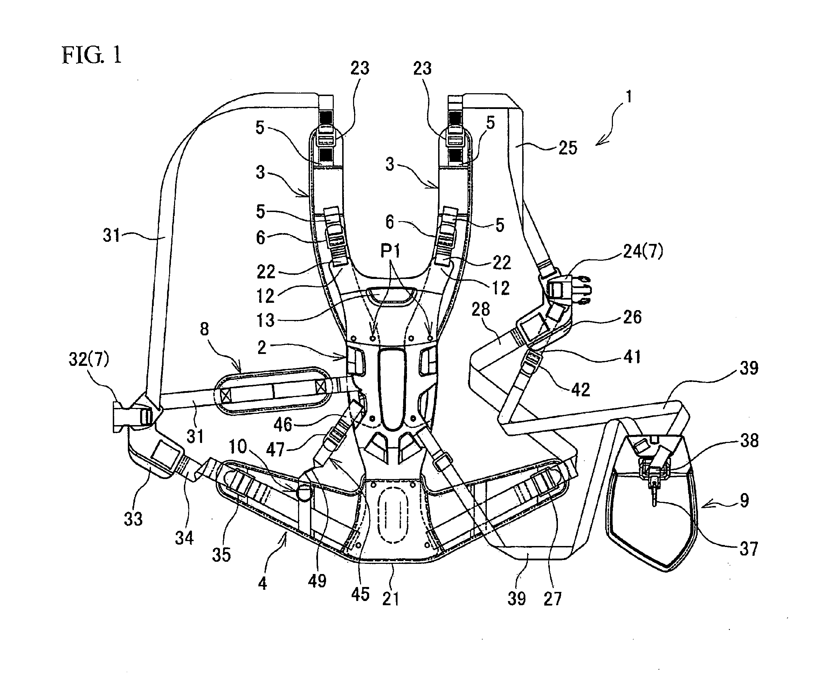

An embodiment of the present invention will be described with reference to FIGS. 1 to 7. A harness 1 shown in FIG. 1 is equipment the operator wears in order to support a power tool such as brush cutter, and includes a back plate 2, shoulder strap pads 3, 3, a waist pad 4, shoulder strap belts 5, 5, first belt length adjusters 6, 6, a buckle 7, a side pad 8, a support member 9, and a hanging ring 10.

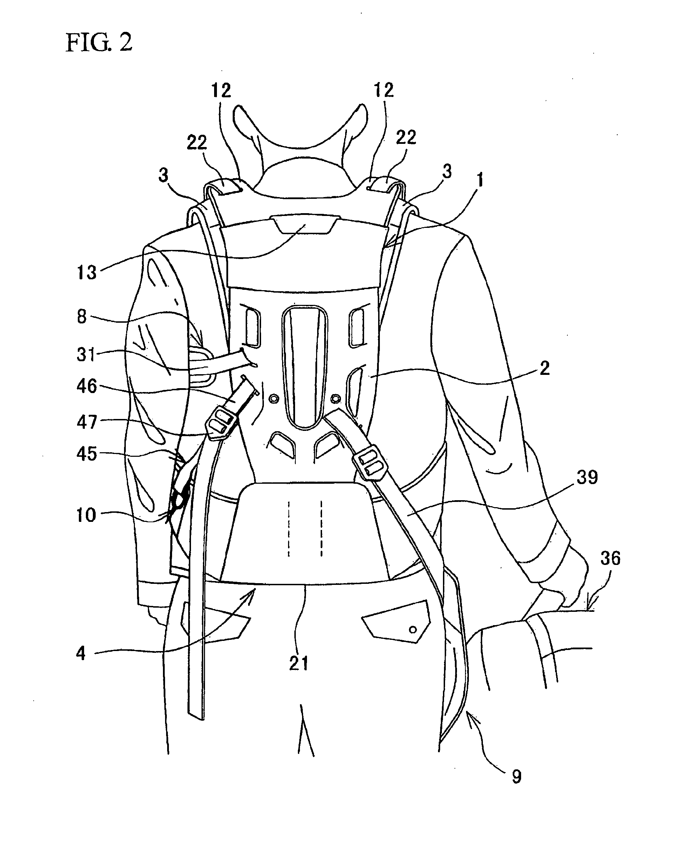

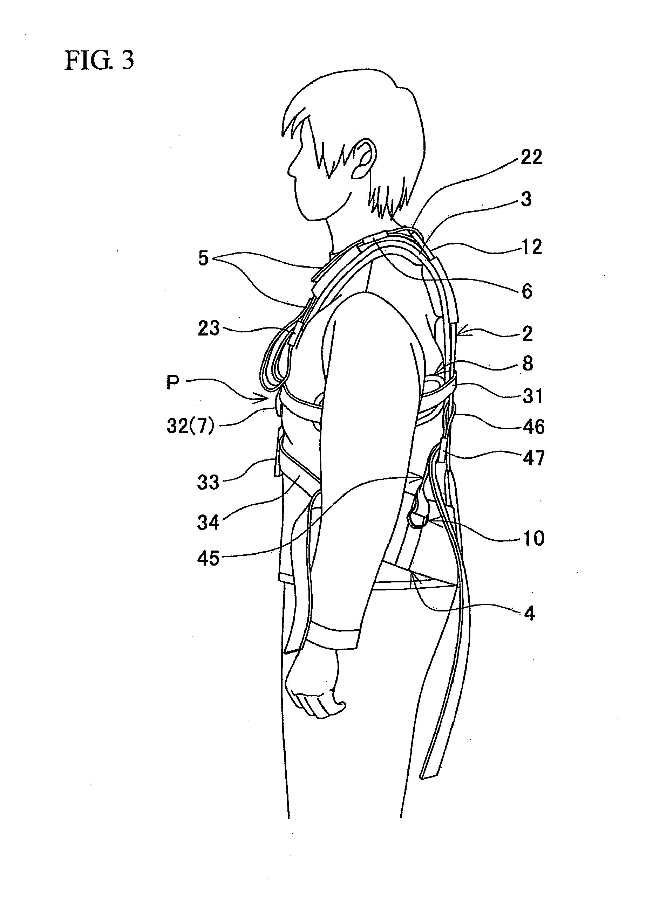

As shown in FIGS. 2 and 3, when the operator wears the harness 1, the back plate 2 is placed on the back of the operator. The back plate 2 is a flexible plate-like member extending in the vertical direction and made of a synthetic resin. The back plate 2 has a pair of narrow portions 12 (see FIGS. 1 and 2) protruding upward from the left and right upper ends of the back plate 2 and having a smaller lateral dimension than a lower part of the back plate 2. As shown in FIGS. 1 and 2, a hole 13 that allows the operator to carry the back plate 2 in his/her hand is formed in an upper part of the back plate 2. The size of the hole 13 is large enough for the operator to insert his/her finger or fingers therein. In the vertical direction of the harness 1 (the vertical direction in FIG. 1), the hole 13 is located above a position P1 (see FIG. 1) where the shoulder strap pads 3, 3 are fixed to the harness 1. The operator can carry the harness 1 with the hand by holding the back plate 2 with the finger or fingers inserted in the hole 13.

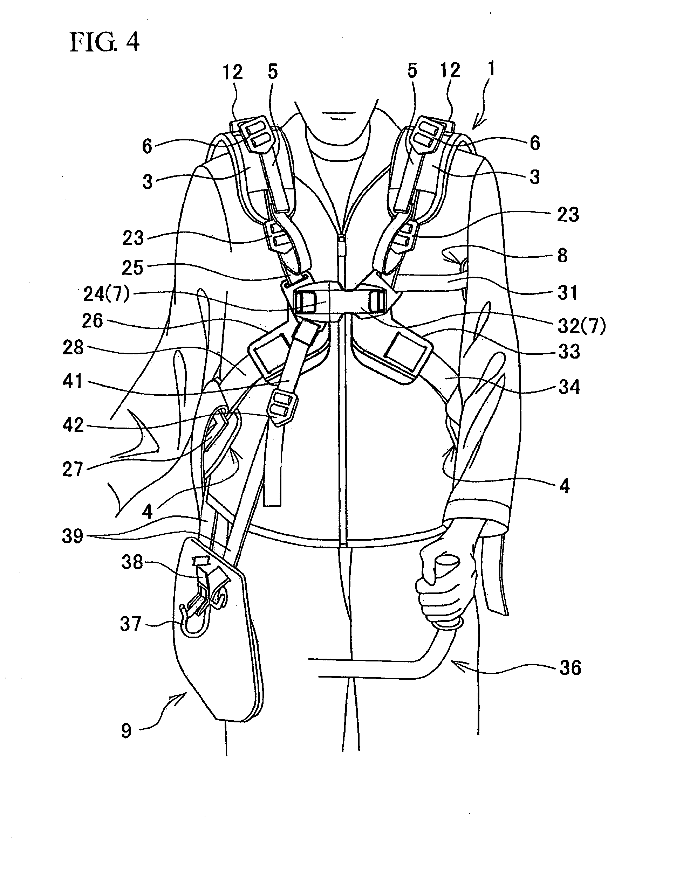

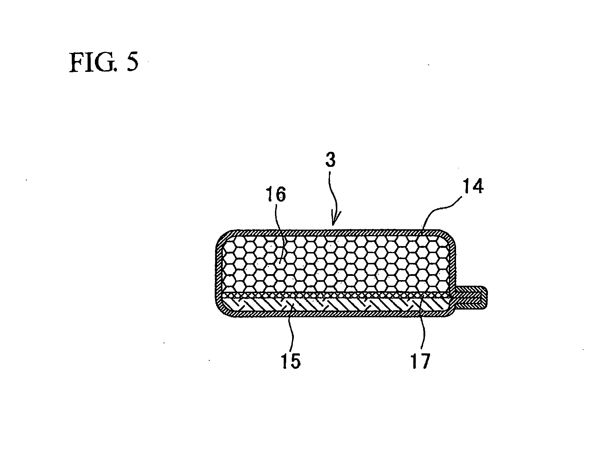

As shown in FIGS. 2 to 4, when the operator wears the harness 1, the shoulder strap pads 3, 3 contact the shoulders of the operator. Upper parts of the shoulder strap pads 3, 3 are fixed at different positions to the inner surface of the back plate 2. As a result, as shown in FIGS. 1 and 4, the shoulder strap pads 3, 3 are fixed to the back plate 2. As shown in FIGS. 1 and 5, each shoulder strap pad 3 is formed in a belt shape, and contains both polyethylene foam 15 and polyurethane foam 16 as cushioning members inside a synthetic fabric cloth 14. In addition, in the present embodiment, a strip of deodorizing sheet 17 containing a deodorant such as activated carbon is interposed between the polyethylene foam 15 and the polyurethane foam 16. The deodorizing sheet 17 provides the shoulder strap pads 3, 3 with a deodorizing function. The deodorizing sheet 17 is an example of a deodorizing sheet of the present invention.

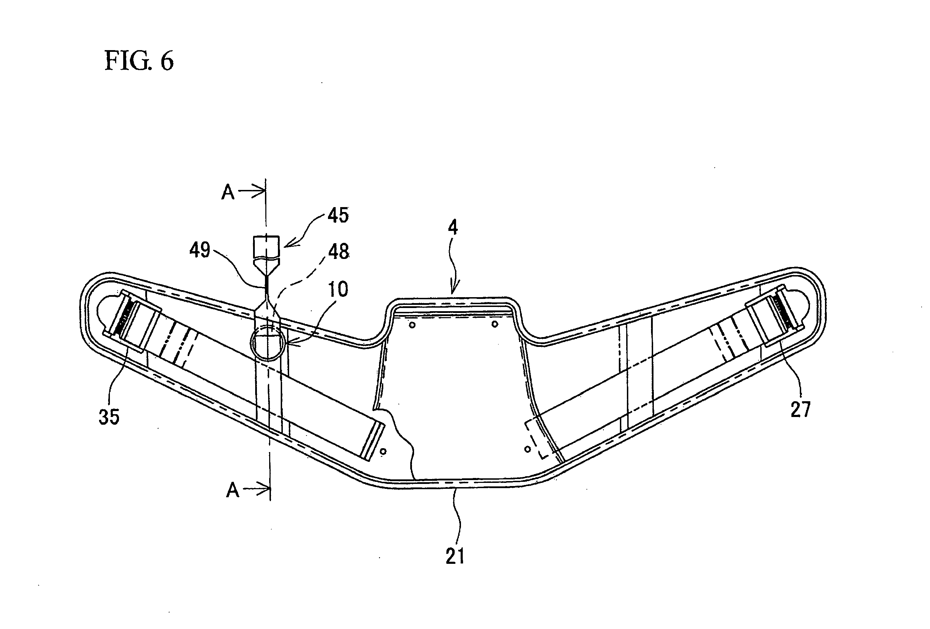

As shown in FIGS. 2 and 3, when the operator wears the harness 1, the waist pad 4 contacts the waist of the operator. The waist pad 4 is fixed to the outer surface of the lower part of the back plate 2. The waist pad 4 is formed in a belt shape extending in the lateral direction, and like the shoulder strap pads 3, 3, contains both polyethylene foam and polyurethane foam inside a synthetic fabric cloth. As shown in FIGS. 1 and 6, the waist pad 4 has a horizontal portion 21 on the lower surface of its central part in the lateral direction, and is shaped so as to be tilted obliquely upward to the left and right from the horizontal portion 21 as a lowermost part. The lateral direction in FIGS. 1 and 6 corresponds to the lateral direction of the waist pad 4.

As shown in FIGS. 3 and 4, when the operator wears the harness 1, the pair of shoulder strap belts 5, 5 respectively located on the shoulder strap pads 3, 3 are placed over the shoulders of the operator. A lower part of each shoulder strap belt 5 is sewn on the shoulder strap pad 3. An upper part of each shoulder strap belt 5 is movably engaged with the first belt length adjuster 6 that serves as an adjusting member, and the length of each shoulder strap belt 5 can be adjusted by the first belt length adjuster 6. As shown in FIGS. 2 and 3, the first belt length adjusters 6, 6 are attached to belts 22, 22 connected to the narrow portions 12, 12 of the back plate 2, respectively.

As shown in FIGS. 1 and 4, second belt length adjusters 23, 23 are attached to the lower ends of the shoulder strap belts 5, 5, respectively. A position adjusting belt 25 connected to a male member 24 of the buckle 7 and capable of adjusting the position of the male member 24 is movably engaged with one of the second belt length adjusters 23, 23. A first plate 26 is fixed to the male member 24. The first plate 26 is made of a synthetic resin, and has a slit that allows a belt to be inserted and held therein. As shown in FIGS. 1, 4, and 6, a third belt length adjuster 27 is attached to the waist pad 4. A first plate position adjusting belt 28 can be adjusted in length by the third belt length adjuster 27 while being inserted through and held in the slit of the first plate 26.

As shown in FIGS. 2 to 4, when the operator wears the harness 1, the side pad 8 can be brought into contact with the left side or flank of the operator. In the following description, the left side in FIG. 2 corresponds to the left-hand side of the operator, the right side in FIG. 2 corresponds to the right-hand side of the operator, the left side in FIG. 4 corresponds to the right-hand side of the operator, and the right side in FIG. 4 corresponds to the left-hand side of the operator. As shown in FIG. 1, a part of a fastening belt 31 is sewn on the upper side of the side pad 8, and the fastening belt 31 is inserted through and held in a slit of a female member 32 of the buckle 7. As shown in FIGS. 1 and 2, one side of the fastening belt 31 is fixed to the back plate 2, and the other side thereof is movably engaged with the other second belt length adjuster 23. As the length of the fastening belt 31 can be adjusted by the second belt length adjuster 23, the side pad 8 can be moved in a direction toward the left side or flank of the operator.

A second plate 33 similar to the first plate 26 (see FIG. 1) is fixed to the female member 32 (see FIG. 1). Moreover, a second plate position adjusting belt 34 (see FIGS. 1 and 4) can be adjusted in length by a forth belt length adjuster 35 (see FIG. 1) attached to the waist pad 4, while being inserted through and held in a slit of the second plate 33.

As shown in FIGS. 1, 2, and 4, the support member 9 is a plate-like member made of a synthetic resin and extending in the vertical direction. The support member 9 is used to engage a brush cutter 36 (see FIG. 4) on the right side of the operator. This support member 9 includes an engaging metal fitting 37 that engages with a hook (not shown) of the brush cutter 36, and a stopper 38 that retains the hook engaged with the engaging metal fitting 37. A support member position adjusting belt 39 is inserted through and held in a slit of the support member 9, one side of the support member position adjusting belt 39 is attached to the back plate 2 (see FIG. 2), and the other side thereof is movably engaged with a fifth belt length adjuster 42 (see FIG. 4) attached to a belt 41 connected to the male member 24. The right side of the operator is an example of the other lateral side of the operator of the present invention.

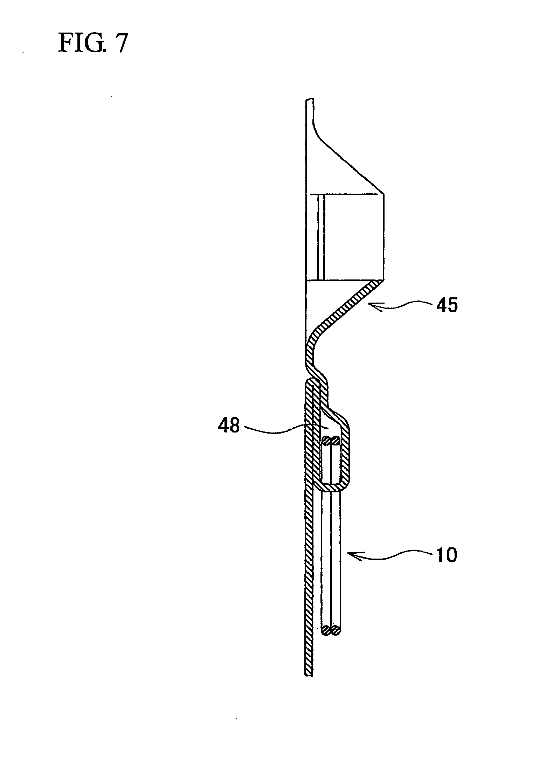

As shown in FIGS. 1 and 2, a support belt 45, which supports the waist pad 4 on the left side of the operator, is attached to the back plate 2. An upper part of the support belt 45 is movably engaged with a sixth belt length adjuster 47 attached to a belt 46 connected to the back plate 2. As shown in FIGS. 6 and 7, a lower part of the support belt 45 is sewn on the left side of the waist pad 4 with respect to a central part in the lateral direction of the waist pad 4, so as to form a loop portion 48 on the waist pad 4. A portion of the support belt 45 in the vertical direction is folded along the centerline thereof in the lateral direction so that both lateral ends face each other, and these lateral ends are sewn together to form a folded portion (a folded portion 49). As shown in FIGS. 1 and 6, the support belt 45 is thus thinned in the folded portion 49, which facilitates movement of the support belt 45.

As shown in FIGS. 6 and 7, the hanging ring 10 made of a metal is attached to the loop portion 48. As shown in FIG. 2, when the operator wears the harness 1, the hanging ring 10 is located on the left side of the operator. The hanging ring 10 is capable of hanging an object thereon. For example, if a karabiner is attached to a holder of a can containing fuel (not shown) and is hung from the hanging ring 10, the operator can easily carry around the can containing fuel. The hanging ring 10 is an example of a hanging portion of the present invention, and the left side of the operator is an example of one lateral side of the operator of the present invention.

An example in which the operator wears the harness 1 to perform a grass cutting operation will be described below. In the following description, the left side in FIG. 1 corresponds to the left side of the harness 1, and the right side in FIG. 1 corresponds to the right side of the harness 1. The operator inserts his/her left arm between the left shoulder strap pad 3 and the side pad 8 and inserts his/her right arm between the right shoulder strap pad 3 and the waist pad 4 in order to bring the shoulder strap pads 3, 3 into contact with his/her both shoulders from behind with the back plate 2 in FIG. 1 being placed on his/her back. Then, while placing the waist pad 4 around his/her waist from behind, the operator inserts the male member 24 of the buckle 7 into the female member 32 thereof on the front side of the operator to couple the male member 24 and the female member 32. Thus, the plates 26, 33 contact the front side of the operator, as shown in FIG. 4. In the state shown in FIG. 4, the shoulder strap pads 3, 3 extend diagonally downward, and can be connected together on the front side of the operator by using the buckle 7 and the belts 25, 31. As shown in the figure, the support member 9 is connected, by the support member position adjusting belt 39, to the buckle 7 that serves as a joint between the shoulder strap pads 3, 3.

Moreover, in the state shown in FIG. 4, the shoulder strap pads 3, 3 can be coupled to the waist pad 4 at one position on the front side of the operator by using the buckle 7, the belts 25, 31, and the plate position adjusting belts 28, 34. As can be seen from FIG. 3, in the vertical direction of the harness 1, the waist pad 4 is located below a position P where the shoulder strap pads 3, 3 are coupled to the waist pad 4. This allows the waist pad 4 to be kept tilted obliquely upward toward the front side of the operator while being in close contact with the waist of the operator as shown in FIGS. 2 and 3. Thus, the waist pad 4 is less likely to slide down the operator's waist even if a force is applied to the support member 9 during the grass cutting operation using the brush cutter 36. As shown in FIG. 2, the horizontal portion 21 of the waist pad 3 makes it easier for the lowermost part of the waist pad 4 to closely contact the waist of the operator. In addition, in the waist pad 4 of the present embodiment, the horizontal portion 21 as the lowermost part is provided in the central part in the lateral direction of the waist pad 4. This makes it easier for the central part of the waist pad 4 to closely contact the waist of the operator. The buckle 7, the belts 25, 31, and the plate position adjusting belts 28, 34 are an example of an attaching/detaching member of the present invention.

In the present embodiment, as shown in FIG. 4, the fastening belt 31 of the side pad 8 is movably engaged with the second belt length adjuster 23 attached to the shoulder strap belt 5 of the left shoulder strap pad 3. Thus, pulling the fastening belt 31 fastens the left shoulder strap pad 3 in a direction toward the left shoulder of the operator, and moves the side pad 8 in a direction in which the side pad 8 fits tightly on the left side or flank of the operator. The left shoulder strap pad 3 is an example of at least one of the pair of shoulder strap pads of the present invention, and the left shoulder of the operator is an example of at least one of the shoulders of the present invention.

The operator pulls the shoulder strap belts 5, 5 out from the first belt length adjusters 6, 6 (see FIGS. 3 and 4) attached to the narrow portions 12, 12 of the back plate 2 via the belts 22, 22, so as to pull the narrow portions 12, 12 toward his/her back. In this manner, the operator can adjust the position of the back plate 2 toward his/her back. In particular, since the narrow portions 12, 12 have a lower second moment of area than the lower part of the back plate 2, the upper part of the back plate 2 where the narrow portions 12, 12 are provided is more easily bent and pulled toward the operator's back than the lower part of the back plate 2. Moreover, since the hole 13 is formed in the back plate 2, the back plate 2 is less rigid in the portion located above the position P1 (see FIG. 1) than in the portion located below the position P1. Accordingly, in the back plate 2, the portion located above the position P1 is more easily bent than the portion located below the position P1. Based on the above, as shown in FIG. 3, the operator can bend the back plate 2 along his/her back so as to closely contact his/her back when wearing the harness 1. The shoulder strap belts 5, 5 and the belts 22, 22 are an example of a belt of the present invention.

After wearing the harness 1 in the manner described above, the operator engages the hook of the brush cutter 36 (see FIG. 4) with the engaging metal fitting 37 (see FIG. 4) of the support member 9. Thus, the weight of the brush cutter 36 is carried by the operator via the harness 1. At this time, since the back plate 2 is in close contact with the operator's back, the weight of the brush cutter 36 can be distributed to the entire back plate 2. Moreover, since the shoulder strap pads 3, 3 are coupled to the waist pad 4 at one position on the front side of the operator, the weight of the brush cutter 36 can be distributed to the shoulder strap pads 3, 3 and the waist pad 4 which are coupled together. Furthermore, since the support member 9 is connected to the buckle 7 that serves as a joint between the pair of shoulder strap pads 3, 3, the weight of the brush cutter 36 can be distributed to both shoulders of the operator which are in contact with the shoulder strap pads 3, 3. The weight of the brush cutter 36 can also be distributed to the side pad 8 contacting the left side or flank of the operator. The burden on the body of the operator can be reduced in this manner.

The operator stably supports the brush cutter 36 with the harness 1 and moves the brush cutter 36 from side to side to cut grass with a cutting blade. If the operator sweats during the grass cutting operation, the sweat is absorbed by the shoulder strap pads 3, 3. The odor of the sweat can be removed by the deodorizing sheet 17 accommodated in the shoulder strap pads 3, 3. Accordingly, even if the harness 1 is shared by a plurality of operators, the operators can comfortably use the harness 1 without being bothered by unpleasant odors resulting from the other operators' sweat.

As shown in FIG. 2, in the glass cutting operation using the harness 1 of the present embodiment, the holder of the can containing fuel, for example, can be hang from the hanging ring 10 via the karabiner on the left side of the operator, with the brush cutter 36 being engaged with the support member 9 on the right side of the operator. Since the waist pad 4 having the hanging ring 10 attached thereto is supported by the back plate 2 via the support belt 45, the waist pad 4 can be prevented from sliding down the waist of the operator due to the weight of the can containing fuel, etc. which is hung from the hanging ring 10. The support belt 45 is thinned at the folded portion 49 (see FIGS. 1 and 6), which facilitates movement of the support belt 45. This can prevent the weight of the can containing fuel, etc. from being intensively imposed on a part of the support belt 45, and thus can prevent the support belt 45 from being torn off from the waist pad 4.

### (Effects of Embodiment)

In the harness 1 of the present embodiment, since the shoulder strap pads 3, 3 have a deodorizing function, unpleasant odors resulting from the operator's sweat absorbed by the shoulder strap pads 3, 3 can be removed. This allows the operator to comfortably use the harness without being bothered by odors.

Since the shoulder strap pads 3, 3, which are the portions located close the operator's nose in the harness 1, has a deodorizing function, emission of unpleasant odors from the shoulder strap pads 3, 3 can be reduced, whereby an optimal deodorizing function can be provided.

Moreover, the harness 1 can be easily provided with a deodorizing function by merely using the deodorizing sheet 17.

Furthermore, since the deodorizing sheet 17 is easy to fold, etc. and is easy to handle, the deodorizing sheet 17 can be easily accommodated in the shoulder strap pads 3, 3.

The harness 1 of the present embodiment is structured so that the back plate 2 is pulled toward the operator's back by adjusting the lengths of the shoulder strap belts 5, 5 by using the first belt length adjusters 6, 6. Thus, the back plate 2 can be brought into close contact with the operator's back by using this simple structure. As a result, the weight of the brush cutter 36 is distributed to the back plate 2, whereby the burden on the operator can be reduced.

Since the support member 9 is connected to the buckle 7 that serves as a joint between the pair of shoulder strap pads 3, 3, the weight of the brush cutter 36 can be distributed to both shoulders of the operator via the shoulder strap pads 3, 3. Thus, the load is not intensively applied to one of the shoulders of the operator, and the burden on the operator's shoulders can be reduced.

Since the narrow portions 12, 12 provided in the upper part of the back plate 2 have a lower second moment of area than the lower part of the back plate 2, the upper part of the back plate 2 is more easily bent than the lower part of the back plate 2. Accordingly, the upper part of the back plate 2 can be easily pulled toward the operator's back by adjusting the lengths of the shoulder strap belts 5, 5 by using the first belt length adjusters 6,6.

Moreover, the back plate 2 is less rigid in the portion located above the position P1 where the shoulder strap pads 3, 3 are fixed to the back plate 2 than in the portion located below the position P1. Accordingly, in the back plate 2, the portion located above the position P1 is more easily bent than the portion located below the position P1. In addition, the operator can carry the harness 1 in his/her hand by holding the back plate 2 with his/her finger or fingers inserted into the hole 13 in the back plate 2. In this manner, the hole 13 can be used to carry the harness 1.

In the harness 1 of the present embodiment, since the shoulder strap pads 3, 3 are coupled to the waist pad 4 at one position on the front side of the operator by using the buckle 7, the belts 25, 31, and the plate position adjusting belts 28, 34, the weight of the brush cutter 36 can be distributed to the shoulder strap pads 3, 3 and the waist pad 4 which are coupled together. As a result, the burden on the operator can be reduced. Moreover, the shoulder strap pads 3, 3 and the waist pad 4 can be attached and detached at one position on the front side of the operator by inserting the male member 24 of the buckle 7 into the female member 32 thereof, and detaching the male member 24 from the female member 32. This facilitates the operation of attaching and detaching the shoulder strap pads 3, 3 and the waist pad 4. Thus, the operator can easily wear and take off the harness 1.

When the shoulder strap pads 3, 3 are coupled to the waist pad 4 via the buckle 7, the belts 25, 31, and the plate position adjusting belts 28, 34, the waist pad 4 can be kept tilted obliquely upward toward the front side of the operator while being in close contact with the operator's waist. Thus, the waist pad 4 is less likely to slide down the operator's waist.

Moreover, since the horizontal portion 21 is provided in the lowermost part of the waist pad 4, this horizontal portion 21 makes it easier for the lowermost part of the waist pad 4 to closely contact the operator's waist when the operator wears the harness 1. In addition, the waist pad 4 can be placed in a stable attitude on the ground with the horizontal portion 21 being in contact with the ground. When the waist pad 4 is placed on the ground, dirt etc. adheres only to the horizontal portion 21, and does not adhere to the entire lower surface of the waist pad 4. Thus, the lower surface of the waist pad 4 can be prevented from entirely getting dirty.

Moreover, since the horizontal portion 21 serving as the lowermost part is provided on the lower surface of the central part in the lateral direction of the waist pad 4, the state in which the central part of the waist pad 4 serving as the lowermost part can easily closely contact the operator's waist can be created when the operator wears the harness 1.

In addition, when the operator wears the harness 1, the weight of the brush cutter 36 is also distributed to the side pad 8, whereby the burden on the operator can further be reduced.

Moreover, the left shoulder strap pad 3 on the operator can be fastened in a direction toward the left shoulder of the operator by pulling the fastening belt 31 to adjust the length of the belt 31. Thus, the operation of fastening the left shoulder strap pad 3 in the direction toward the left shoulder can be performed simultaneously with the operation of fastening the side pad 8 on the left side or flank of the operator. In addition, the weight of the brush cutter 36 can be distributed to the left shoulder strap pad 3 and the side pad 8.

In the harness 1 of the present embodiment, an object such as a can containing fuel can be easily carried by merely hanging the object from the hanging ring 10 of the waist pad 4.

The operator can hang the object from the hanging ring 10 located on the left side of the operator, with the brush cutter 36 being engaged with the support member 9 on the right side of the operator. Thus, the object can be carried without hindering the grass cutting operation using the brush cutter 36.

The waist pad 4 is supported by the back plate 2 via the support belt 45, and the waist pad 4 can be prevented from sliding down the operator's waist due to the weight of the object hung from the hanging ring 10.

Moreover, the support belt 45 is thinned in the folded portion 49, which facilitates movement of the support belt 45. This can prevent the weight of the object from being intensively imposed on a part of the support belt 45, and thus can prevent the support belt 45 from being torn off from the waist pad 4.

The present invention is not limited to the above embodiment, and the configuration can be partially changed as appropriate without departing from the scope of the invention. For example, the deodorizing sheet 17 can be accommodated not only in the shoulder strap pads 3, 3 but also in the waist pad 4 and the side pad 8. Instead of the deodorizing sheet 17, a fragrant sheet, e.g., impregnated with a fragrant component may be accommodated in the shoulder strap pads, so as to perform a deodorizing function by the fragrance emitted from the shoulder strap pads. Instead of the deodorizing sheet or the fragrance sheet, granular deodorant or fragrance can be accommodated in the shoulder strap pads.

Unlike the above embodiment, the horizontal portion may be provided on the lower surface of the waist pad 4 at a position shifted to the left or right from the central part in the lateral direction of the waist pad 4. Unlike the above embodiment, the waist pad 4 may be shaped such that the lower surface of the waist pad 4 is tilted obliquely upward to the left and right from the lower surface of the central part with the lower surface of the central part forming an apex. In the above embodiment, the harness is provided with the side pad that contacts the left side or flank of the operator. However, the harness may be provided with a side pad that contacts the right side or flank of the operator, or may be provided with a plurality of side pads that contact the left and right sides or flanks of the operator. The above embodiment is described with respect to an example in which a part of the fastening belt 31 is sewn on the upper side of the side pad 8. However, a fastening belt may be inserted through and held in the side pad 8, and the side pad 8 may be brought into contact with the left side or flank of the operator as the length of the fastening belt is adjusted. In this case, unlike the example in which a part of the fastening belt 31 is sewn on the upper side of the side pad 8, the fastening belt can be inserted into and removed from the side pad 8 while being engaged therewith. This can reduce a force pulling the fastening belt to adjust the length of the fastening belt.

Unlike the above embodiment, for example, a hook-and-loop fastener, a snap button, etc. may be attached to the waist pad 4 instead of the hanging ring 10, and a hook-and-loop fastener on an object may be pressed against the hook-and-loop fastener on the waist pad 4 so as to be bonded together, or a snap button on the object may be attached to the snap button on the waist pad 4.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A harness (1) which is worn by an operator to support a power tool (36) on a lateral side of the operator and which includes a back plate (2) extending in a vertical direction and placeable on a back of the operator and a pair of shoulder strap pads (3, 3) that contact both shoulders of the operator, wherein the shoulder strap pads (3, 3) are fixed to the back plate (2), the harness (1) **characterized in that**
the back plate (2) is connected to each of the shoulder strap pads (3, 3) by a belt (5, 22), and the harness (1) comprises an adjusting member (6, 6) with which a length of the belt (5, 22) is adjustable, so that a position of the back plate (2) is adjustable toward the back of the operator by adjusting the length of the belt (5, 22) using the adjusting member (6, 6).

2. The harness (1) according to claim 1, further comprising:
a support member (9) that supports the power tool (36) on the lateral side of the operator, wherein
the pair of shoulder strap pads (3, 3) extend diagonally downward, and are connected together with a joint (7) on a front side of the operator, and the support member (9) is co n-nected to the joint (7).

3. The harness (1) according to claim 1 or 2, wherein
a narrow portion (12) having a smaller lateral dimension than a lower part of the back plate (2) is provided in an upper part of the back plate (2), the narrow portion (12) is connected to each of the shoulder strap pads (3) by the belt (5, 22), and the narrow portion (12) is bent and pulled toward the back of the operator by adjusting the length of the belt (5, 22) using the adjusting member (6).

4. The harness (1) according to any one of claims 1 to 3, wherein
a hole (13) that allows the back plate (2) to be carried by hand is provided in the back plate (2) at a position above a position where the shoulder strap pads (3, 3) are fixed to the back plate (2).

5. The harness (1) according to claim 3, wherein
the belt (5, 22) is formed by a belt (22) to which the adjusting member (6) is attached and which is connected to the narrow portion (12), and a shoulder strap belt (5) that has one end sewn on the shoulder strap pad (3) and the other end movably engaged with the adjusting member (6) such that the shoulder strap belt (5) is adjustable in length.

6. The harness (1) according to any one of claims 3 to 5, wherein
a pair of the narrow portions (12) are formed at left and right upper ends of the back plate (2) so as to protrude upward from the back plate (2).

7. The harness (1) according to any one of claims 2 to 5, wherein
the joint (7) is formed by a buckle (7) including a female member (32) that is co n-nected to one (3) of the pair of shoulder strap pads (3, 3), and a male member (24) that is connected to the other shoulder strap pad (3) and that is inserted into the female member (32) so as to be coupled with the female member (32).

8. The harness (1) according to claim 7, wherein
a support member position adjusting belt (39) is inserted through and held in the support member (9), one end of the support member position adjusting belt (39) is attached to the back plate (2), and the other end of the support member position adjusting belt (39) is movably engaged with a belt length adjuster (42) attached to a belt (41) connected to the male member (24).

## Patentansprüche

1. Tragegeschirr (1), das von einem Bediener getragen wird, um ein strombetriebenes Werkzeug (36) auf einer seitlichen Seite des Bedieners zu halten, und das eine Rückenplatte (2), die sich in eine Vertikalrichtung erstreckt und auf einem Rücken des Bedieners platzierbar ist, und ein Paar Schulterbandpolster (3, 3), die beide Schultern des Bedieners berühren, umfasst, wobei die Schulterbandpolster (3, 3) an der Rückenplatte (2) fixiert sind, wobei das Tragegeschirr (1) **dadurch gekennzeichnet ist, dass**
die Rückenplatte (2) durch einen Gurt (5, 22) mit jedem der Schulterbandpolster (3, 3) verbunden ist und das Tragegeschirr (1) ein Einstellelement (6, 6) umfasst, mit dem eine Länge des Gurts (5, 22) einstellbar ist, so dass eine Position der Rückenplatte (2) in Richtung des Rückens des Bedieners durch Einstellen der Länge des Gurts (5, 22) unter Verwendung des Einstellelements (6, 6) einstellbar ist.

2. Tragegeschirr (1) nach Anspruch 1, das ferner umfasst:
ein Halteelement (9), welches das elektrisch betriebene Werkzeug (36) auf der seitlichen Seite des Bedieners hält, wobei
das Paar Schulterbandpolster (3, 3) sich diagonal nach unten erstreckt und mit einem Verbindungsstück (7) auf einer Vorderseite des Bedieners verbunden ist und das Halteelement (9) mit dem Verbindungsstück (7) verbunden ist.

3. Tragegeschirr (1) nach Anspruch 1 oder 2, wobei
ein schmaler Abschnitt (12) mit einer kleineren seitlichen Abmessung als ein unterer Teil der Rückenplatte (2) in einem oberen Teil der Rückenplatte (2) bereitgestellt ist, wobei der schmale Abschnitt (12) durch den Gurt (5, 22) mit jedem der Schulterbandpolster (3) verbunden ist und der schmale Abschnitt (12) in Richtung des Rückens des Bedieners gebogen und gezogen wird, indem die Länge des Gurts (5, 22) unter Verwendung des Einstellelements (6) eingestellt wird.

4. Tragegeschirr (1) nach einem der Ansprüche 1 bis 3, wobei
ein Loch (13), das zulässt, dass die Rückenplatte (2) mit der Hand getragen wird, an einer Position über einer Position, wo die Schulterbandpolster (3, 3) an der Rückenplatte (2) fixiert sind, in der Rückenplatte (2) bereitgestellt ist.

5. Tragegeschirr (1) nach Anspruch 3, wobei
der Gurt (5, 22) durch einen Gurt (22), an dem das Einstellelement (6) befestigt ist und der mit dem schmalen Abschnitt (12) verbunden ist, und einen Schulterbandgurt (5), der ein Ende auf das Schulterbandpolster (3) genäht hat und das andere Ende beweglich mit dem Einstellelement (6) in Eingriff hat, so dass der Schulterbandgurt (5) in der Länge einstellbar ist, ausgebildet ist.

6. Tragegeschirr (1) nach einem der Ansprüche 3 bis 5, wobei
ein Paar der schmalen Abschnitte (12) an linken und rechten oberen Enden der Rückenplatte (2) ausgebildet ist, um von der Rückenplatte (2) nach oben vorzustehen.

7. Tragegeschirr (1) nach einem der Ansprüche 2 bis 5, wobei
das Verbindungsstück (7) durch eine Schnalle (7) gebildet wird, die ein aufnehmendes Glied (32), das mit einem (3) des Paars Schulterbandpolster (3, 3) verbunden ist, und ein aufzunehmendes Glied (24), das mit dem anderen Schulterbandpolster (3) verbunden ist und das in das aufnehmende Glied (32) eingesetzt wird, um mit dem aufnehmenden Glied (32) gekoppelt zu werden, umfasst.

8. Tragegeschirr (1) nach Anspruch 7, wobei
ein Einstellgurt (39) für die Halteelementposition durch das Halteelement (9) eingesetzt ist und in ihm gehalten wird, ein Ende des Einstellgurts (39) für die Halteelementposition an der Rückenplatte (2) befestigt ist und das andere Ende des Einstellgurts (39) für die Halteelementposition mit einer Gurtlängeneinstelleinrichtung (42) beweglich in Eingriff gebracht wird, die an einem mit dem aufzunehmenden Glied (24) verbundenen Gurt (41) befestigt ist.

## Revendications

1. Harnais (1) qui est porté par un opérateur pour supporter un outil électrique (36) sur un côté latéral de l'opérateur et qui inclut une plaque arrière (2) s'étendant dans une direction verticale et pouvant être placée sur un dos de l'opérateur, et une paire de coussins pour bretelles (3, 3) qui viennent en contact avec les deux épaules de l'opérateur, dans lequel les coussins pour bretelles (3, 3) sont fixés à la plaque arrière (2), le harnais (1) étant **caractérisé en ce que** la plaque arrière (2) est connectée à chacun des coussins pour bretelles (3, 3) par une ceinture (5, 22) et le harnais (1) comprend un élément d'ajustement (6, 6) avec lequel une longueur de la ceinture (5, 22) est ajustable de sorte qu'une position de la plaque arrière (2) est ajustable vers le dos de l'opérateur en ajustant la longueur de la ceinture (5, 22) en utilisant l'élément d'ajustement (6, 6).

2. Harnais (1) selon la revendication 1, comprenant en outre :
un élément de support (9) qui supporte l'outil électrique (36) sur le côté latéral de l'opérateur, dans lequel
la paire de coussins pour bretelles (3, 3) s'étend en diagonale vers le bas et est connectée ensemble à une charnière (7) sur un côté avant de l'opérateur, et
l'élément de support (9) est connecté à la charnière (7).

3. Harnais (1) selon la revendication 1 ou 2, dans lequel
une portion étroite (12) ayant une dimension latérale inférieure à une partie inférieure de la plaque arrière (2) est prévue dans une partie supérieure de la plaque arrière (2), la portion étroite (12) est connectée à chacun des coussins pour bretelles (3) par la ceinture (5, 22), et la portion étroite (12) est courbée et tirée vers le dos de l'opérateur en ajustant la longueur de la ceinture (5, 22) en utilisant l'élément d'ajustement (6).

4. Harnais (1) selon l'une quelconque des revendications 1 à 3, dans lequel
un orifice (13) qui permet à la plaque arrière (2) d'être portée manuellement est prévu dans la plaque arrière (2) en une position au-dessus d'une position où les coussins pour bretelles (3, 3) sont fixés à la plaque arrière (2).

5. Harnais (1) selon la revendication 3, dans lequel
la ceinture (5, 22) est formée par une ceinture (22) à laquelle l'élément d'ajustement (6) est relié et qui est connectée à la portion étroite (12), et une ceinture pour bretelles (5) qui a une extrémité cousue sur le coussin pour bretelles (3) et l'autre extrémité engagée de manière mobile avec l'élément d'ajustement (6) de sorte que la ceinture pour bretelles (5) est ajustable en longueur.

6. Harnais (1) selon l'une quelconque des revendications 3 à 5, dans lequel
une paire de portions étroites (12) est formée à des extrémités supérieures gauche et droite de la plaque arrière (2) de manière à faire saillie vers le haut depuis la plaque arrière (2).

7. Harnais (1) selon l'une quelconque des revendications 2 à 5, dans lequel
la charnière (7) est formée par une boucle (7) incluant un élément femelle (32) qui est connecté à un (3) de la paire de coussins pour bretelles (3, 3), et un élément mâle (24) qui est connecté à l'autre coussin pour bretelles (3) et qui est inséré dans l'élément femelle (32) de manière à être raccordé à l'élément femelle (32).

8. Harnais (1) selon la revendication 7, dans lequel
une ceinture d'ajustement de position d'élément de support (39) est insérée à travers et maintenue dans l'élément de support (9), une extrémité de la ceinture d'ajustement de position d'élément de support (39) est reliée à la plaque arrière (2) et l'autre extrémité de la ceinture d'ajustement de position d'élément de support (39) est engagée de manière mobile avec un dispositif d'ajustement de longueur de ceinture (42) relié à une ceinture (41) connectée à l'élément mâle (24).
